# EUROPÄISCHE PATENTSCHRIFT

(11) **EP 2 406 193 B1**
(45) Veröffentlichungstag und Bekanntmachung des Hinweises auf die Patenterteilung: **18.09.2019**
(21) Anmeldenummer: 10711031.4
(22) Anmeldetag: 09.03.2010
(51) Int. Cl.: C03B 37/012, H01S 3/067, G02B 6/036

(54) **VERFAHREN ZUR HERSTELLUNG EINER OPTISCHEN FASER**
METHOD OF PRODUCTION FOR AN OPTICAL FIBER
PROCÉDÉ DE FABRICATION D'UNE FIBRE OPTIQUE

(30) Priorität: 10.03.2009 DE 102009012430; 30.07.2009 DE 102009035375
(43) Veröffentlichungstag der Anmeldung: 18.01.2012
(73) Patentinhaber: J-Fiber GmbH, 07751 Jena (DE)
(72) Erfinder: HÄMMERLE, Wolfgang, 07745 Jena (DE); BREHM, Lothar, 07743 Jena (DE); GUTSCHE, Thomas, 07749 Jena (DE); AUTH, Matthias, 45289 Essen (DE)
(74) Vertreter: Kruspig, Volkmar
(86) Internationale Anmeldenummer: PCT/EP2010/052990
(87) Internationale Veröffentlichungsnummer: WO 2010/103011

(56) Entgegenhaltungen:
- EP-A2- 0 918 382
- WO-A1-2009/014623
- US-A- 4 978 377
- US-A1- 2005 254 764
- US-B1- 6 411 762
- GILGEN H H ET AL: "MEASUREMENTS ON BIREFRIGENT FIBRES: COST 217 INTERLABORATORY MEASUREMENT CAMPAIGN" IEE PROCEEDINGS A. PHYSICAL SCIENCE, MEASUREMENT &INSTRUMENTATION, MANAGEMENT & EDUCATION, 1271980 1, Bd. 140, Nr. 6, 1. November 1993 (1993-11-01), Seiten 479-484, XP000421128 ISSN: 0960-7641

## Beschreibung

Die Erfindung betrifft ein Verfahren zur Herstellung einer optischen Faser, wobei die optische Faser einen Faserkern und eine Faserkernummantelung umfasst und die Zylindersymmetrie der Faser gestört ist sowie die Störung der Zylindersymmetrie einen chaotischen Strahlverlauf in der Faser hervorruft, gemäß Oberbegriff des Anspruchs 1 sowie ein Rohrsegment zur Verwendung für eine Preform gemäß Patentanspruch 19 und eine nach dem Verfahren hergestellte Faser gemäß Anspruch 28.

Eine Doppelkern-Laserfaser besteht aus mindestens einem Laserkern, der mit einem Selten-Erde-Element dotiert ist sowie aus einer Ummantelung, die den Kern umschließt. Die Brechzahl des Laserkerns ist größer als die Brechzahl der Ummantelung. Der Pumpkern dient dazu, Multimode-Pumpenergie, die im Allgemeinen von Laserdioden bereitgestellt wird, aufzunehmen. Die aufgenommene Pumpenergie wird im Pumpkern geführt und überträgt die Pumpenergie während sie über die Faserlänge fortschreitet durch wiederholte Wechselwirkung auf den Laserkern. Die Führungseigenschaften des Pumpkerns für die Pumpstrahlung werden durch mindestens einen äußeren Überzug bestimmt, dessen Brechzahl kleiner als die Brechzahl des inneren Überzuges ist. Der äußere Überzug besteht häufig aus einem fluoriniertem Polymer.

In "Optics Letters", 1995, Vol. 20, Nr. 6, Seiten 578 bis 580 wird ein Doppelkern-Faserlaser beschrieben, der einen runden Pumpkern-Querschnitt aufweist und dessen Pumpkern von einer Umhüllung umgeben ist. Diese Lösung eines Doppelkern-Faserlasers weist den Nachteil auf, dass nur ein kleiner Teil des Pumplichtes im zentrischen Laserkern absorbiert wird. Berechnungen in DE 195 35 526 C1 zeigen, dass der Anteil der im Kern absorbierten Pumpleistung einer Faser mit zentrisch gelegenem Laserkern und rundem Pumpkern nahezu unabhängig von der Faserlänge nur ca. 10 % beträgt. Die Ursache dafür liegt darin begründet, dass in den zylindersymmetrischen Pumpkern sowohl Helixstrahlen als auch Meridionalstrahlen übertragen werden müssen. Die Helixstrahlen besitzen die Eigenschaft, dass sie das Faserzentrum nicht kreuzen und dementsprechend durch den Laserkern nur ungenügend absorbiert werden.

Aus DE 3874701T2 ist ein Doppelkern-Faserlaser mit einem runden Querschnitt des Pumpkerns und einem azentrischen Laserkern bekannt. Dieser Faseraufbau mit azentrischem Kern hat den Nachteil, dass sich die Faser nur mit hohem Aufwand fertigen läßt. Außerdem gestaltet sich die Kopplung von Fasern mit zentrischem Kern zu Fasern mit azentrischem Kern schwierig. In dieser Patentschrift wird ferner ein Doppelkern-Faserlaser vorgestellt, der einen rechteckförmigen Pumpkern-Querschnitt besitzt, jedoch eine zentrische Lage des Laserkernes aufweist. Auch diese Laserfaser ist nur mit hohem Aufwand zu fertigen.

In DE 195 35 526 C1 wird eine Laserfaser mit rundem und zentrisch positioniertem Laserkern vorgeschlagen, die außenseitig wenigstens einen in Längsrichtung des Doppelkern-Faserlasers verlaufenden Abschliff aufweist, so dass im Querschnitt ein D- oder Mehrfach-D förmiger Pumpkern entsteht. Diese Lösung ist relativ aufwendig in der Fertigung, insbesondere wenn mehrere D-förmige Stukturen angeschliffen werden sollen. Während des Schleifprozesses der Preform entstehen Mikrorisse, die in einem anschließenden Polierprozess entfernt werden müssen. Der Polierprozess nutzt Poliermittel, die als Restbestandteile in oberflächennahen Bereichen zu unerwünschten Absorptionen führen. Darüber hinaus können die Poliermittelrest-Bestandteile dazu führen, dass die Faser beim Faserziehen, verursacht durch diese Oberflächen-Kontaminationen, reißt. Die im Allgemeinen entstehende D-Struktur stellt eine äußere Grenzfläche auf der Faser dar, die bei nicht hinreichend guter Polieroberfläche zu unerwünschten Streuverlusten führen kann. An den scharfen Übergangsstellen Faserrundung/ebene Fläche besteht außerdem die Gefahr, dass an diesen Stellen beim Faserziehen das Coatingmaterial die Glas-Oberfläche nicht vollständig bedeckt.

Aus US 6411762 B1 ist bekannt, dass durch gezielt erzeugte Löcher im undotierten Claddingbereich in die zirkulare äußere Grenzfläche Unregelmäßigkeiten gebracht werden sollen, die Helixstrahlen in Meridionalstrahlen überführen. Ein Nachteil dieses Verfahrens liegt darin, dass die Löcher in die Ausgangs-preform aufwendig gebohrt werden müssen. Durch das Bohren entstehen in der Grenzfläche Mikrorisse, die durch einen aufwendigen Politurprozess beseitigt werden müssen. Die Politurrückstände diffundieren während nachfolgender Heißtemperaturschritte in das Preforminnere und verursachen unerwünschte Absorptionen.

Aus DE 69503249 T2 sind Pumpkern-Strukturen von optischen Fasern in Form von konvexen Polygonen zur effizienten Ausnutzung der Pumpleistung bekannt. Nachteilig bei dieser Lösung ist zum einen der relativ große Aufwand für die Realisierung der konvexen Polygonform durch umfangreiches Schleifen und Polieren der Preformoberflächen. Polierrückstände führen auch hier zu unerwünschten Absorptionen und beeinträchtigen die Leistungsfestigkeit aber auch die mechanische Festigkeit der Laserfaser. Die nach dem Schleifen und Polieren zurückbleibende Rauhigkeit der Grenzfläche bewirkt, dass Pumpstrahlung aus dem Pumpkern in das umgebende Polymer gestreut und dort absorbiert wird. Insbesondere bei hohen Pumpleistungen können diese Absorptionen im Polymer zu Degradationen bis zur Zerstörung der Faser führen.

Die WO 2009/014623 A1 offenbart eine optische Faser mit großer Modenfläche, eine so genannte "large mode-Area optical fiber", bei der eine so genannte "bow tie"-Struktur zur Anwendung kommt. Derartige Strukturen sind dafür vorgesehen, der Faser polarisationserhaltende Eigenschaften zu verleihen. Die Druckschrift erwähnt sektorartige Strukturen im Faserquerschnitt, um mechanische Spannungen hervorzurufen und letztlich eine spannungsinduzierte Doppelbrechung innerhalb der Faser zu erzeugen. Zur Modenmischung wird auf eine bestimmte Formgestaltung des Pumpkerns, insbesondere eine oktogonale Außenform, zurückgegriffen, die im Zusammenwirken mit einem äußeren Cladding so genannte skew modes eliminiert und so nicht absorbierbare Moden beseitigt.

In der EP 0 918 382 A2 ist ebenso eine Faser vom "bow tie"-Typ offenbart. Die polarisationserhaltenden Eigenschaften der Faser werden gemäß der dort offenbarten Lehre durch spannungsinduzierende Abschnitten in der Faser bewirkt. Es handelt sich dort um das Erzeugen von doppelbrechenden Eigenschaften durch das Einbringen thermischer Spannungen. Die dort gelehrte Faser ist offensichtlich kreisrund, deren Cladding ist durch die eingebrachten Segmente nicht in seiner Form beeinflusst. Die dort gezeigte Faser ermöglicht keine Modenmischung bei einer Lichteinkopplung in den inneren Claddingbereich.

Die US 4 978 377) betrifft ein Verfahren zum Zusammenfügen einer faseroptischen Preform aus einzelnen vorgefertigten Elementen. Offenbart wird die Herstellung einer stark doppelbrechenden polarisationserhaltenden Faser. Diese entspricht somit ebenfalls einer Faser vom "bow tie"-Typ wie jene aus den vorhergenannten beiden Druckschriften.

Die Aufgabe der vorliegenden Erfindung ist es, ein wirtschaftliches Verfahren zur Herstellung einer optischen Hochleistungsfaser anzugeben. Außerdem sollen Halbzeuge angegeben werden, welche die vorteilhafte Durchführung eines derartigen Verfahrens ermöglichen.

Die Lösung der Aufgabe erfolgt durch ein Verfahren zur Herstellung einer optischen Faser gemäß der Lehre des Patentanspruchs 1 und durch ein Rohrsegment gemäß der Lehre des Patentanspruchs 19, wobei die Unteransprüche mindestens zweckmäßige Ausgestaltungen und Weiterbildungen darstellen.

Mittels des erfindungsgemäßen Verfahrens werden optische Fasern hergestellt, welche einen Faserkern und eine Faserkernummantelung umfassen und außerdem die Zylindersymmetrie der Faser gestört ist. Die Störung der Zylindersymmetrie ruft einen chaotischen Strahlverlauf in der Faser hervor. Die Folge davon ist, dass ein eingekoppeltes Pumplicht in vorteilhafter Weise nahezu vollständig im Faserkern/Laserkern absorbiert wird.

Um eine derartige optische Faser herzustellen, wird eine Preform, welche aus einem Kernmaterial und einer Ummantlung besteht, einem allgemein bekannten Faserziehprozess unterzogen, wobei die um das Kernmaterial angeordnete Ummantelung aus mehreren einzelnen Ummantelungsschichten besteht.

Das Verfahren zeichnet sich erfindungsgemäß dadurch aus, dass die Preform aus der um das Kernmaterial angeordneten Ummantelung aus mehreren einzelnen Ummantelungsschichten besteht und dass mindestens eine der Ummantelungsschichten mindestens über einen Längsabschnitt als Kreisringsektorschicht aus mindestens einem Kreisringsektor ausgebildet ist.

Erfindungswesentlich ist weiterhin, dass ein einzelner Kreisringsektor durch ein mehrfaches Teilen eines Rohres in Längsrichtung erzeugt wird, wobei die Kanten so gebrochen und/oder angefast werden, sodass sich die Kreisringsektoren-Außenlinie verkürzt und die Trennkanten der Kreisringsektoren nach dem Trennvorgang thermisch poliert und/oder oberflächlich glatt geschmolzen werden. Es gehört weiterhin zum Gegenstand der Erfindung, dass das Kernmaterial und die Ummantelungsschichten der Preform werden vor oder während des Faserziehprozesses verschmolzen werden, wobei das Pumpcladding durch eine Verschmelzung von mindestens einem Kreisringsektor aus undotiertem oder mit einem die Brechzahl reduzierenden Dotanden bestehenden Quarzglas zwischen der ersten und der zweiten Ummantelungsschicht entsteht und
durch die Verschmelzung des mindestens eines Kreisringsektors im Innern des Pumpkerns die Zylindersymmetrie des Pumpkerns gestört wird. Infolge eines chaotischen Strahlverlaufs im Pumpkern wird hierdurch erfindungsgemäß das eingekoppelte Pumplicht nahezu vollständig im Faserkern absorbierbar.

Der Verschmelzungsprozess des Kernmaterials mit den Ummantelungsschichten kann dabei in einem einzigen Prozessschritt vor oder während des Faserziehprozesses erfolgen.

Um den Verschmelzungsprozess der inneren Ummantelungsschichten zu beschleunigen, wird der Verschmelzungsprozess im Vakuum, d.h. durch Anlegen eines Unterdrucks an die Zwischenräume der Schichten durchgeführt.

Eine Preform, wie sie bei dem dargelegten Verfahren zur Herstellung einer optischer Faser Verwendung findet, besteht aus einem Kernmaterial und einer Ummantelung, wobei die Ummantelung aus mehreren einzelnen Ummantelungsschichten besteht und mindestens eine der Ummantelungsschichten als Kreisringsektorschicht ausgebildet ist.

Die einzelnen Ummantelungsschichten umfassen unter anderem eine erste Ummantelungsschicht, welche als geschlossener Kreisring ausgebildet ist und um das Kernmaterial direkt anliegend angeordnet ist. Das bedeutet von Kernmaterialmitte nach Außen betrachtet folgt nach dem Kernmaterial diese erste Ummantelungsschicht, wobei direkt anliegend in diesem Fall nicht zwangsläufig bedeuten muss, dass zwischen dem Kernmaterial und der Ummantelungsschicht kein Luftspalt vorhanden sein darf. Direkt anliegend soll vielmehr verdeutlichen, dass die erste Ummantelungsschicht, die erste von Innen nach Außen betrachtete angebrachte Schicht um das Kernmaterial darstellt.

Die Ummantelung sieht außerdem eine zweite Ummantelungsschicht vor, welche ebenfalls als geschlossener Kreisring ausgebildet ist und beispielsweise die äußerste Schicht der Preform bildet.

Es ist durchaus denkbar, dass die Ummantelung neben der bereits erwähnten Kreisringsektorschicht noch eine dritte oder weitere Ummantelungsschicht(en) in Form eines geschlossenen Kreisringes aufweist.

In einer besonders bevorzugten Ausgestaltungsform der Erfindung sind die Ummantelungsschichten und die Kreisringsektorschicht konzentrisch um das Kernmaterial angeordnet.

Die Kreisringsektorschicht ist dabei außerhalb der ersten Ummantelungsschicht angebracht. Das bedeutet, dass die Kreisringsektorschicht beispielsweise zwischen der ersten Ummantelungsschicht und der zweiten Ummantelungsschicht angeordnet sein kann. Außerdem ist denkbar, dass die Kreisringsektorschicht außerhalb der ersten und außerhalb der zweiten Ummantelungsschicht angeordnet ist und beispielsweise die äußerste Schicht der Preform bildet.

Die einzelnen Ummantelungsschichten können des Weiteren unterschiedliche Querschnittsflächen aufweisen, da zur Realisierung der neuartigen optischen Faser/Laserfaser das Pumpcladding/die Ummantelung im Querschnitt in mehrere im Allgemeinen unterschiedlich dicke konzentrische Kreisringe geteilt wird.

Die Dicke der ersten Ummantelungsschicht aus vorzugsweise undotiertem Quarzglas wird durch optische Gesichtspunkte der Wellenausbreitung innerhalb des Faserkerns sowie durch fertigungstechnologische Gesichtspunkte (z.B. Substratrohrabmessungen bei MCVD-Fertigung) bestimmt.

Die Dicke der restlichen Ummantelung (umfasst die zweite Ummantelungsschicht und die Kreisringsektorschicht) wird festgelegt durch das für die Faser gewünschte Kern-/Cladding-Durchmesserverhältnis.

Der äußere Durchmesser der äußeren Ummantelungsschicht bestimmt in der Laserfaser den Umkreis des Pumpcladdings.

Das Flächenverhältnis der zweiten Ummantelungsschicht und der Kreisringsektorschicht hängt von der gewünschten Abweichung von der Zylindersymmetrie und von den Winkelabmessungen der Kreisringsektoren ab.

Das Kernmaterial und die erste Ummantelungsschicht, welche als Kreisring ausgebildet sein kann, bilden eine Kernpreform, wohingegen das Kernmaterial mit allen Ummantelungsschichten (erste Ummantelungsschicht, zweite Ummantelungsschicht und Kreisringsektorschicht) eine Sekundärpreform bilden.

Die Herstellung einer optischen Faser, welche die eingangs genannten Eigenschaften und den veranschaulichten Aufbau besitzt, erfolgt in einem allgemein bekannten Faserziehprozess. Dabei wird die Sekundärpreform so präpariert, dass die den ersten und zweiten Ummantelungsschichten bzw. der Kreisringsektorschicht zugeordneten Rohre bzw. Rohrteile vorzugsweise konzentrisch um das Kernmaterial bzw. die Kernpreform angeordnet sind.

Die Kreisringsektorschicht der erfindungsgemäßen Preform besteht aus mindestens einem Kreisringsektor, bevorzugt aus einer Vielzahl von Kreisringsektoren. Eine besonders vorteilhafte Anordnung sieht z.B. zwei oder acht Kreisringsektoren vor.

Die Kreisringsektoren sind vorteilhafterweise äquidistant angeordnet. Zwischen den einzelnen, konzentrisch um die erste oder zweite Ummantelungsschicht angeordneten Kreisringsektoren ist im Allgemeinen der gleiche Abstand vorhanden. Die Kreisringsektorschicht besteht aus undotiertem oder aus einem die Brechzahl reduzierenden Dotanden aufweisenden Quarzglas.

Das Pumpcladding entsteht wie bereits erwähnt durch die Verschmelzung von mindestens einem vorzugsweise konzentrisch angeordneten Kreisringsektor aus undotiertem oder mit einem die Brechzahl reduzierenden Dotanden bestehenden Quarzglas zwischen der ersten und der zweiten Ummantelungsschicht innerhalb des Pumpcladdings. Durch die Verschmelzung des Kreisringsektors im Innern des Pumpkerns wird die Zylindersymmetrie des Pumpkerns gestört. Durch die Störung der Zylindersymmetrie wird der Strahlverlauf im Pumpkern chaotisch. Die Folge davon ist, dass das eingekoppelte Pumplicht nahezu vollständig im Faserkern/Laserkern absorbiert wird.

Durch mindestens einen Kreisringsektor wird die Zylindersymmetrie der Preform bzw. der zu fertigenden Faser gestört und damit die Kernabsorption erhöht. Für das Spleißen dieser Laserfaser z.B. mit runden Transportfasern ist es wünschenswert, dass die Symmetrie der Laserfaser möglichst hoch ist. Das kann dadurch erreicht werden, dass mindestens zwei oder mehr äquidistant angeordnete Kreisringsektoren im Zwischenraum zwischen der ersten und der zweiten Ummantelungsschicht verschmolzen werden.

Der Kreisringsektorschicht kann im Fertigungsprozess einem Quarzglasrohr mit einem bestimmten CSA (Cross Sectional Area)-Wert CSA1 zugeordnet werden. Einen einzelnen Kreisringsektor erhält man, indem ein entsprechendes Rohr in Längsrichtung mehrfach geteilt wird (z.B. durch Trennen mittels CO₂-Laser). Der zweiten Ummantelungsschicht wird einem weiteren Quarzglasrohr mit anderem CSA-Wert CSA2 zugeordnet.
Um beim Verschmelzen der einzelnen Ummantelungsschichten im Verfahren zu Herstellung einer optischen Faser die Entstehung von Bläschen an den Kreisringsektoren-Kanten zu vermeiden, ist es Teil der Erfindung, wenn die Kanten so gebrochen bzw. angefast werden, sodass sich die Kreisringsektoren-Außenlinie verkürzt. Die Trennkanten der Kreisringsektoren werden nach dem Trennvorgang thermisch poliert bzw. oberflächlich glatt geschmolzen.

Das Verhältnis des Kreisdurchmessers des Kreissektors mit Kreisringsektor zum Kreisdurchmesser eines benachbarten Kreissektors ohne Kreisringsektor liegt erfindungsgemäß zwischen 0,10 und 0,99.

Nach dem Verschmelzen aller Kreisringe und der vorzugsweise konzentrisch angeordneten Kreisringsektorschicht entsteht eine Preformstruktur mit gebrochener Zylindersymmetrie. Aus dem Kreissektor mit dem mindestens einen Kreisringsektor ergibt sich der Umkreis des resultierenden Pumpkernquerschnittes. Aus dem Kreissektor ohne den Kreisringsektor erhält man den Innenkreis des resultierenden Pumpkernquerschnitts.

Die Erfindung soll nachstehend anhand eines Ausführungsbeispiels sowie unter Zuhilfenahme zweier Figuren näher erläutert werden.

Hierbei zeigt:
- Fig. 1: eine Querschnittsdarstellung der erfindungsgemäßen Anordnung des Kernmaterials und der einzelnen Ummantelungsschichten einer erfindungsgemäßen Preform vor dem Verschmelzungsprozess und
- Fig. 2: Darstellung eines möglichen Querschnittsprofils der erfindungsgemäßen Preform nach dem Verschmelzungsprozess.

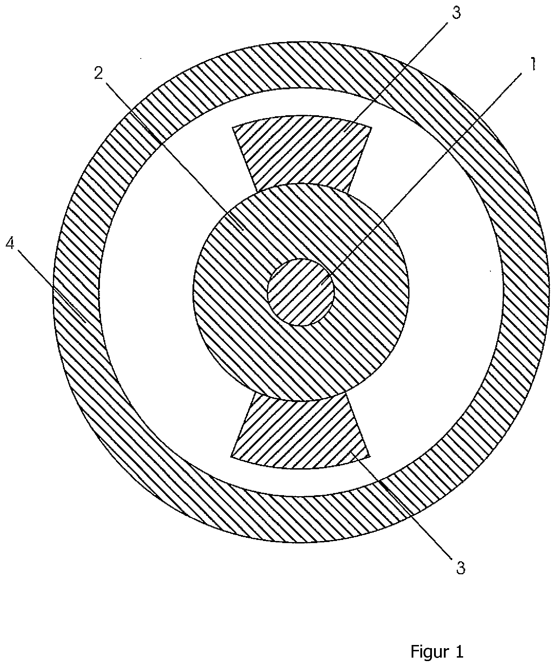

Wie in Fig. 1 verdeutlicht, wird die Preform vor dem Verschmelzungs- bzw. Faserziehprozess aus einzelnen Schichten zusammengesetzt. Im folgenden Ausführungsbeispiel sind die Ummantelungsschichten um das Kernmaterial 1 konzentrisch angeordnet. Es ist jedoch auch eine exzentrische Anordnung des Kernmaterials 1 und der einzelnen Ummantelungsschichten, z.B. durch eine nichtäquidistante Anordnung der Kreisringsektoren denkbar.

Um das Kernmaterial 1 ist zunächst eine erste Ummantelungsschicht 2 angeordnet. Diese ist im dargelegten Beispiel aus undotiertem Quarzglas gefertigt.

Um die erste Ummantelungsschicht 2 ist von Innen nach Außen betrachtet eine weitere Ummantelungsschicht in Form einer Kreisringsektorschicht ausgebildet. Diese besteht in der abgebildeten Figur aus zwei einzelnen Kreisringsektoren 3, welche konzentrisch um die erste Ummantelungsschicht 2 und äquidistant angeordnet sind. Das bedeutet, zwischen den Trennkanten der beiden Kreisringsektoren 3 liegt der gleiche Abstand vor.

Die Kreisringsektoren 3 bestehen aus einem undotierten Quarzglas, wobei die Kreisringsektoren 3 Teile eines Quarzglasrohres sind, die in Längsrichtung mittels CO₂-Laserstrahl aus dem Rohr herausgearbeitet wurden.

Die Kanten der Kreisringsektoren 3 sind angefast, sodass eine Verkürzung der Kreisringsektoren-Außenkante erfolgt. Außerdem sind die Kanten nach dem Trennvorgang thermisch verschmolzen und poliert worden.

Als äußerste Schicht der Preform ist eine zweite Ummantelungsschicht 4 vorgesehen.

Wie aus der Fig. 1 hervorgeht, weisen die einzelnen Ummantelungsschichten (2; 3; 4) unterschiedliche Dicken auf. Die Abmaße der Querschnittsflächen weichen im Allgemeinen voneinander ab.

Das Kernmaterial 1, die erste und zweite Ummantelungsschicht (2; 4) und die Kreisringsektorschicht, bestehend aus den z. B. zwei Kreisringsektoren 3, werden zur Herstellung einer erfindungsgemäßen optischen Faser in diesem dargelegten Ausführungsbeispiel zunächst zu einer Preform verschmolzen.

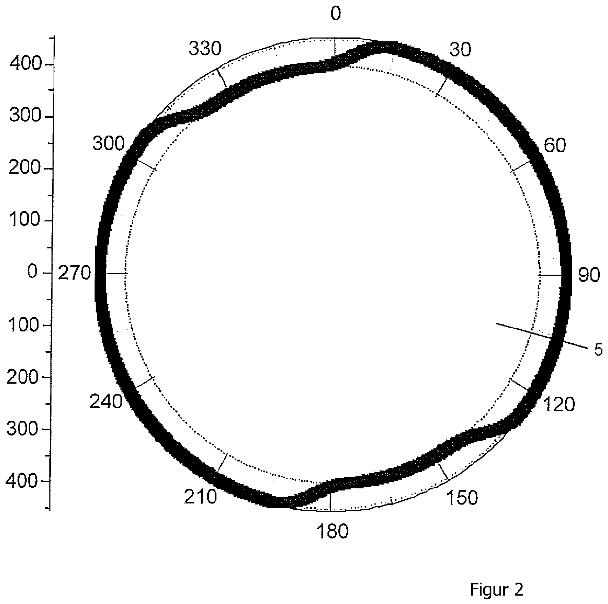

Aufgrund der Freiräume zwischen den beiden Kreisringsektoren 3 ergibt sich beispielsweise ein Querschnittsprofil der Preform 5 wie es in Fig. 2 dargestellt ist.

Das Querschnittsprofil der Preform 5 weist gegenüber der Kreisform zwei Rücksprungbereiche oder Vertiefungen auf, wodurch die Zylindersymmetrie des Pumpkerns gestört wird. Der Symmetrieparameter S beschreibt den Grad der Ausbildung der Vertiefungen.

Die Preform wird abschließend einem Faserziehprozess unterzogen, wodurch eine optische Faser gebildet wird, welche aufgrund der Störung der Zylindersymmetrie einen chaotischen Strahlverlauf im Pumpkern aufweist. Die Folge davon ist, dass das eingekoppelte Pumplicht in vorteilhafter Weise nahezu vollständig im Faserkern/Laserkern absorbiert wird.

### Bezugszeichenliste

- 1: Kernmaterial
- 2: erste Ummantelungsschicht
- 3: Kreisringsektoren
- 4: zweite Ummantelungsschicht
- 5: Querschnittsprofil Preform

## Patentansprüche

1. Verfahren zur Herstellung einer optischen Faser, wobei die optische Faser einen Pumpkern in Form eines Faserkerns und eine Faserkernummantelung in Form eines Pumpcladdings umfasst und die Zylindersymmetrie der hergestellten Faser gestört ist, sowie die Störung der Zylindersymmetrie einen chaotischen Strahlverlauf in der Faser hervorruft, auf der Basis einer Preform, welche aus einem Kernmaterial (1) und einer Ummantelung bestehend, einem Faserziehprozess unterzogen wird,
**dadurch gekennzeichnet, dass**
die Preform aus der um das Kernmaterial angeordneten Ummantelung aus mehreren einzelnen Ummantelungsschichten (2; 3; 4) besteht und mindestens eine der Ummantelungsschichten mindestens über einen Längsabschnitt als Kreisringsektorschicht aus mindestens einem Kreisringsektor (3) ausgebildet ist,
wobei
ein einzelner Kreisringsektor durch mehrfaches Teilen eines Rohres in Längsrichtung erzeugt wird wobei die Kanten so gebrochen und/oder angefast werden, sodass sich die Kreisringsektoren-Außenlinie verkürzt
und die Trennkanten der Kreisringsektoren nach dem Trennvorgang thermisch poliert und/oder oberflächlich glatt geschmolzen werden,
wobei das Kernmaterial (1) und die Ummantelungsschichten (2; 3; 4) der Preform vor oder während des Faserziehprozesses verschmolzen werden, wobei
das Pumpcladding durch eine Verschmelzung von mindestens einem Kreisringsektor aus undotiertem oder mit einem die Brechzahl reduzierenden Dotanden bestehenden Quarzglas zwischen der ersten und der zweiten Ummantelungsschicht entsteht und durch die Verschmelzung des mindestens eines Kreisringsektors im Innern des Pumpkerns die Zylindersymmetrie des Pumpkerns gestört wird und infolge eines chaotischen Strahlverlaufs im Pumpkern das eingekoppelte Pumplicht nahezu vollständig im Faserkern absorbierbar wird.

2. Verfahren nach Anspruch 1,
**dadurch gekennzeichnet, dass**
der Verschmelzungsprozess vakuumunterstützt erfolgt.

3. Verfahren nach einem der vorangegangenen Ansprüche,
**dadurch gekennzeichnet, dass**
eine erste um das Kernmaterial folgende Ummantelungsschicht (2) als geschlossener Kreisring ausgebildet ist.

4. Verfahren nach Anspruch 3,
**dadurch gekennzeichnet, dass**
eine zweite Ummantelungsschicht (4) als geschlossener Kreisring ausgebildet und außerhalb der ersten Ummantelungsschicht (2) angeordnet ist.

5. Verfahren nach Anspruch 4,
**dadurch gekennzeichnet, dass**
die zweite Ummantelungsschicht (4) die äußerste Schicht der Preform bildet.

6. Verfahren nach einem der Ansprüche 3 bis 5,
**dadurch gekennzeichnet, dass**
die Ummantelung eine dritte oder weitere als geschlossenen Kreisring ausgebildete Ummantelungsschicht aufweist.

7. Verfahren nach einem der Ansprüche 3 bis 6,
**dadurch gekennzeichnet, dass**
die Ummantelungsschichten (2; 3; 4) konzentrisch um das Kernmaterial (1) ausgebildet werden.

8. Verfahren nach einem der Ansprüche 3 bis 7,
**dadurch gekennzeichnet, dass**
die Kreisringsektorschicht außerhalb der ersten Ummantelungsschicht (2) ausgebildet wird.

9. Verfahren nach einem der Ansprüche 4 bis 8,
**dadurch gekennzeichnet, dass**
die Kreisringsektorschicht außerhalb der ersten Ummantelungsschicht (2) und innerhalb der zweiten Ummantelungsschicht (4) ausgebildet wird.

10. Verfahren nach einem der Ansprüche 3 bis 9,
**dadurch gekennzeichnet, dass**
die erste Ummantelungsschicht (2) aus undotiertem Quarzglas besteht.

11. Verfahren nach einem der vorangegangenen Ansprüche,
**dadurch gekennzeichnet, dass**
die einzelnen Ummantelungsschichten (2; 3; 4) unterschiedliche Querschnittsflächen aufweisen.

12. Verfahren nach einem der vorangegangenen Ansprüche,
**dadurch gekennzeichnet, dass**
das Kernmaterial (1) mit allen Ummantelungsschichten (2; 3; 4) eine Sekundärpreform bildet.

13. Verfahren nach Anspruch 1,
**dadurch gekennzeichnet, dass**
die Kreisringsektorschicht aus n (mit n = 1; 2; 3 ...) Kreisringsektoren (3) besteht.

14. Verfahren nach Anspruch 13,
**dadurch gekennzeichnet, dass**
die Kreisringsektoren (3) äquidistant ausgebildet werden.

15. Verfahren nach Anspruch 13,
**dadurch gekennzeichnet, dass**
die Kreisringsektoren (3) nicht äquidistant angeordnet sind, wobei eine exzentrische Anordnung des Kernmaterials (1) und der einzelnen Ummantelungsschichten entsteht.

## Claims

1. A method for producing an optical fiber wherein the optical fiber includes a pumping core configured as a fiber core and a fiber core jacket configured as a pump cladding and a cylinder symmetry of the produced fiber is disturbed, wherein the disturbance of the cylinder symmetry causes a chaotic beam path in the fiber based on a preform which includes a core material (1) and a jacket and which is subjected to a fiber pulling process,
**characterized in that**
the preform includes the jacket that is arranged about the core material and which is made from plural individual jacket layers (2; 3; 4) and at least one of the jacket layers is configured over at least one longitudinal section as a circular ring sector layer made from at least one circular ring sector (3),
wherein an individual circular ring sector is produced by several divisions of a tube in the longitudinal direction, wherein edges are broken and/or beveled so that the circular ring sector outline is shortened and separation edges of the circular ring sectors are thermally polished after the separation process and/or melted to form a smooth surface, wherein the core material (1) and the jacket layers (2, 3, 4) of the preform are melted before or during the fiber pulling process,
wherein the pump cladding is produced by melting at least one circular ring sector made from a quartz glass that is non-doted or provided with a dopant which reduces the refractory index between the first and the second jacket layer and wherein the melting of the at least one circular ring sector in an interior of the pump core disturbs a cylinder symmetry of the pump core and the coupled pump light is almost completely absorbable in the fiber core due to a chaotic beam path in the pump core.

2. The method according to claim 1, **characterized in that** the melting process is vacuum supported.

3. The method according to one of the preceding claims, **characterized in that** a first jacket layer (2) that is formed about the core material is formed as a closed circular ring.

4. The method according to claim 3, **characterized in that** a second jacket layer (4) is configured as a closed circular ring and arranged outside of the first jacket layer (2).

5. The method according to claim 4, **characterized in that** the second jacket layer (4) forms an outermost layer of the preform.

6. The method according to one of the claims 3 - 5, **characterized in that** the jacket includes a third or additional jacket layer that is configured as a closed circular ring.

7. The method according to one of the claims 3 - 6, **characterized in that** the jacket layers (2, 3, 4) are concentrically arranged about the core material (1).

8. The method according to one of the claims 3 - 7, **characterized in that** the circular ring sector layer is configured outside of the first jacket layer (2).

9. The method according to one of the claims 4 - 8, **characterized in that** the circular ring sector layer as configured outside of the first jacket layer and within the second jacket layer (4).

10. The method according to one of the claims 3 - 9, **characterized in that** the first jacket layer (2) is made from a non-doped quartz glass.

11. The method according to one of the preceding claims, **characterized in that** the individual jacket layers (2, 3, 4) have different cross sectional surfaces.

12. The method according to one of the preceding claims, **characterized in that** the core material (1) forms a secondary preform together with all enveloping layers (2; 3; 4)

13. The method according to claim 1, **characterized in that** the circular ring sector layer is made from n circular ring sections (3) wherein n = 1; 2; 3 ...

14. The method according to claim 13, **characterized in that** the circular ring sectors (3) are configured equidistant.

15. The method according to claim 13, **characterized in that** the circular ring sectors (3) are not configured equidistant so that an eccentrical arrangement of the core material (1) and of the individual jacket layers is provided.

## Revendications

1. Procédé de fabrication d'une fibre optique, dans lequel la fibre optique comprend un coeur de pompage sous la forme d'un coeur de fibre et une gaine de coeur de fibre sous la forme d'un enrobage de pompage, et la symétrie cylindrique de la fibre produite est perturbée, et la perturbation de la symétrie cylindrique provoque une trajectoire de faisceau chaotique dans la fibre, à partir d'une préforme qui est constituée par un matériau de coeur (1) et une gaine et qui est soumise à un procédé d'étirage de fibre,
**caractérisé en ce que**
la préforme se compose de la gaine disposée autour du matériau de coeur et constituée d'une pluralité de couches de gaine individuelles (2 ; 3 ; 4), et l'une au moins des couches de gaine est réalisée, sur au moins une portion longitudinale, comme couche de secteur annulaire à base circulaire à partir d'au moins un secteur annulaire à base circulaire (3),
dans lequel
un secteur annulaire à base circulaire individuel est créé en divisant un tube plusieurs fois dans la direction longitudinale, les arêtes étant cassées et/ou chanfreinées de telle sorte que la ligne extérieure des secteurs annulaires à base circulaire est raccourcie et après l'opération de séparation les arêtes de séparation des secteurs annulaires à base circulaire sont polies thermiquement et/ou fondues pour être lisses en surface,
le matériau de coeur (1) et les couches de gaine (2 ; 3 ; 4) de la préforme sont fondus avant ou pendant le processus d'étirage de fibre, et
l'enrobage de pompage se forme par une fusion d'au moins un secteur annulaire à base circulaire en verre de quartz, non dopé ou constitué d'un dopant, réduisant l'indice de réfraction entre la première et la seconde couche de gaine, et la symétrie cylindrique du coeur de pompage est perturbée par la fusion dudit au moins un secteur annulaire à base circulaire à l'intérieur du coeur de pompage, et, suite à une trajectoire du faisceau chaotique dans le coeur de pompage, la lumière de pompage injectée est pratiquement complètement absorbable dans le coeur de fibre.

2. Procédé selon la revendication 1,
**caractérisé en ce que**
le processus de fusion s'effectue sous l'assistance d'un vide.

3. Procédé selon l'une des revendications précédentes,
**caractérisé en ce que**
une première couche de gaine (2) qui suit le matériau de coeur est réalisée sous forme d'anneau à base circulaire fermé.

4. Procédé selon la revendication 3,
**caractérisé en ce que**
une seconde couche de gaine (4) est réalisée sous forme d'anneau à base circulaire fermé et est agencée à l'extérieur de la première couche de gaine (2).

5. Procédé selon la revendication 4,
**caractérisé en ce que**
la seconde couche de gaine (4) constitue la couche la plus à l'extérieur de la préforme.

6. Procédé selon l'une des revendications 3 à 5,
**caractérisé en ce que**
la gaine présente une troisième ou une autre couche de gaine réalisée sous forme d'anneau à base circulaire fermé.

7. Procédé selon l'une des revendications 3 à 6,
**caractérisé en ce que**
les couches de gaine (2 ; 3 ; 4) sont réalisées concentriquement autour du matériau de coeur (1).

8. Procédé selon l'une des revendications 3 à 7,
**caractérisé en ce que**
la couche de secteur annulaire à base circulaire est réalisée à l'extérieur de la première couche de gaine (2).

9. Procédé selon l'une des revendications 4 à 8,
**caractérisé en ce que**
la couche de secteur annulaire à base circulaire est réalisée à l'extérieur de la première couche de gaine (2) et à l'intérieur de la seconde couche de gaine (4).

10. Procédé selon l'une des revendications 3 à 9,
**caractérisé en ce que**
la première couche de gaine (2) est constituée en verre de quartz non dopé.

11. Procédé selon l'une des revendications précédentes,
**caractérisé en ce que**
les couches de gaine individuelles (2 ; 3 ; 4) présentent différentes surfaces en section transversale.

12. Procédé selon l'une des revendications précédentes,
**caractérisé en ce que**
le matériau de coeur (1) constitue une préforme secondaire avec toutes les couches de gaine (2 ; 3 ; 4).

13. Procédé selon la revendication 1,
**caractérisé en ce que**
la couche de secteur annulaire à base circulaire est constituée de n secteurs annulaires à base circulaire (3) (avec n = 1 ; 2 ; 3 ...).

14. Procédé selon la revendication 13,
**caractérisé en ce que**
les secteurs annulaires à base circulaire (3) sont réalisés de façon équidistante.

15. Procédé selon la revendication 13,
**caractérisé en ce que**
les secteurs annulaires à base circulaire (3) sont disposés de façon non équidistante, moyennant quoi il résulte une disposition excentrique du matériau de coeur (1) et des couches de gaine individuelles.
